# EUROPEAN PATENT APPLICATION

(11) **EP 1 270 351 A1**
(43) Date of publication of application: **02.01.2003**
(21) Application number: 02008485.1
(22) Date of filing: 15.04.2002
(51) Int. Cl.: B60S 9/02, E02F 9/08

(54) **Center pivot stabilizer apparatus for a work machine**

(30) Priority: 28.06.2001 US 894552
(71) Applicant: CATERPILLAR INC., Peoria Illinois 61629-6490 (US)
(72) Inventor: Slater, Ken G. c/0 Caterpillar Inc., Peoria, Illinois 61629-6490 (US); Veitch, Steven c/o Caterpillar Inc., Peoria Illinois 61629-6490 (US); Williams, Craig c/o Caterpillar Inc., Peoria, Illinois 61629-6490 (US)
(74) Representative: Wagner, Karl H., Dipl.-Ing.

(57) **Abstract**

The present invention stabilizer apparatus is used on a work machine and includes a stabilizer assembly (110) removably connected with an axle (60) of the work machine. Additionally, the stabilizer assembly (110) is pivotally connected to a frame (30) of the work machine at a distance from the axle so that the stabilizer assembly may move automatically in response to shifting of the axle (60) during leveling of the frame. The present invention is a simple and efficient method of automatically moving of the stabilizer assembly correspondent with the movement of the axle.

## Description

### Technical Field

This invention relates generally to a stabilizer apparatus for a work machine and more particularly to the ability to automatically pivot the stabilizer apparatus about a central pivot in conjunction with leveling a frame of the work machine.

### Background

It is well known to provide work machines, such as excavators, backhoe loaders, telescopic material handlers, and the like, with a pair of stabilizer assemblies which engage the ground at lateral opposite sides of the work machine. The stabilizer assemblies are used to support the weight of the work machine and any loads being manipulated thereon so that a more stable and wider operating platform can be provided by the ground engaging wheels and the suspension system of the work machine. Such stabilizer assemblies are movable from a transport position to a ground engaging position to fix the stabilizer assemblies relative to the work machine in order to provide the wider operating platform. Often, however, ground conditions may be sloped or uneven requiring an operator to level the work machine in a well-known manner. When this occurs, the stabilizer assemblies may no longer contact the ground and will require position adjustment. Because each of the individual stabilizer assemblies are normally moved through independent control, it may be difficult to effectively locate the stabilizer assemblies on the ground in direct relation to the frame leveling that has occurred.

Therefore, it is also well known to provide dependent movement of the stabilizer assemblies to adjust for leveling movement of the work machine. Typically, the work machine includes a frame, an axle for supporting the frame and a hydraulic cylinder connected between the frame and the axle. The hydraulic cylinder is actuated in the well known manner to level the work machine in relation to the ground by shifting or pivoting the axle relative to the frame via a pivot pin. In this type of arrangement, the pair of stabilizer assemblies are welded on the axle. Therefore, dependent movement of the stabilizer assemblies in correspondence with the axle is achieved via actuation of the hydraulic cylinder. However, the welding of the stabilizer assemblies to the axle may require complex axle rework when the stabilizer assemblies must be removed for maintenance or repair. Further, retrofitting existing work machines with such welded stabilizer assemblies would be difficult and time-consuming.

The present invention is directed to overcome one or more of the problems as set forth above.

### Summary of the Invention

In one aspect of the present invention, a stabilizer apparatus is disclosed for a work machine. The work machine has a frame, an axle for supporting the frame and a hydraulic cylinder connected between the frame and the axle for shifting the axle relative to the frame to level the work machine. The stabilizer apparatus comprises a stabilizer assembly removably connectable to the axle of the work machine. A connection device is operable between the stabilizer assembly and the frame of the work machine to allow pivotal movement of the stabilizer assembly in response to the shifting movement of the axle.

In another aspect of the invention, a method of automatically moving a stabilizer assembly on a work machine in conjunction with selectable shifting movement of an axle relative to a frame of the work machine is disclosed. The method comprises the steps of removably connecting the stabilizer assembly with the axle. Then, pivotally connecting the stabilizer assembly with the frame at a predetermined distance from the axle. Next, connecting a hydraulic cylinder between the frame and the axle. Then, moving the stabilizer assembly to a ground engaging position from a transport position. Finally, selectively shifting the axle relative to the frame via the hydraulic cylinder to level the frame of the work machine so that the position of the stabilizer assembly is automatically adjusted in response to the shifting of the axle.

In yet another aspect of the invention, a method of automatically moving a stabilizer assembly on a work machine in conjunction with selectable shifting movement of an axle relative to a frame of the work machine is disclosed. The method comprises the steps of removably connecting the stabilizer assembly with the axle. Then, pivotally connecting the stabilizer assembly with the frame at a predetermined distance from the axle. Next, connecting a hydraulic cylinder between the frame and the axle. Then, selectively shifting the axle relative to the frame via the hydraulic cylinder to level the frame of the work machine so that the position of the stabilizer assembly is automatically adjusted in response to the shifting of the axle. Finally, moving the stabilizer assembly to a ground engaging position from a transport position.

The present invention stabilizer apparatus includes a stabilizer assembly removably connected with the axle and pivotally connected to the frame at a distance from the axle so that the stabilizer assembly may move automatically in response to shifting of the axle during leveling of the frame. The present invention is a simple and efficient means to achieve movement of the stabilizer assembly correspondent with the movement of the axle. Further, the present invention is designed to allow for addition of the stabilizer apparatus to an existing work machine (retrofitting) and for easily removing the stabilizer assembly from the work machine for maintenance or repair.

### Brief Description of the Drawings

Fig. 1 is a partial, perspective view of a work machine including a stabilizer apparatus embodying the present invention;
Fig. 2 is a partial, front view of the work machine including the present invention stabilizer apparatus;
Fig. 3 is a partial, side view of the work machine depicting the association of the present invention stabilizer apparatus with an axle and frame of the work machine; and
Fig. 4 is a partial, side view of the stabilizer apparatus depicting specific connections with the work machine.

### Detailed Description

While the invention is susceptible to various modifications and alternative forms, a specific embodiment thereof has been shown by way of example in the drawings and will herein be described in detail. It should be understood, however, that there is no intent to limit the invention to the particular form disclosed, but on the contrary, the intention is to cover all modifications, equivalents, and alternatives falling within the spirit and scope of the invention as defined by the appended claims.

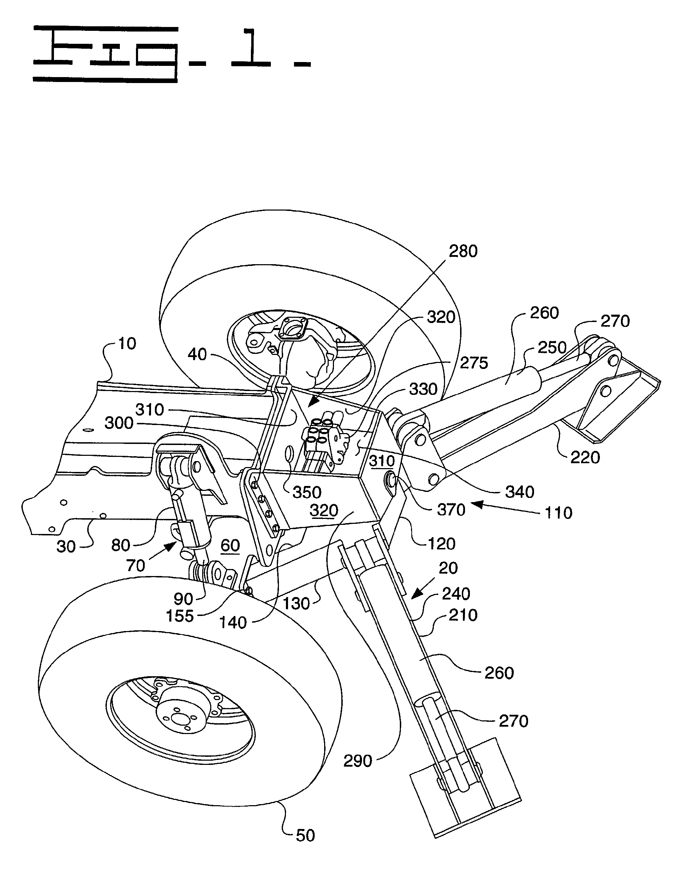

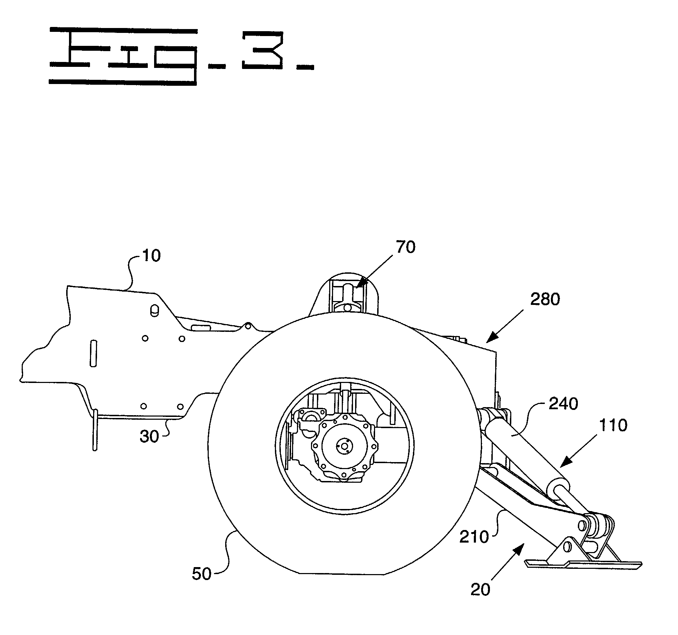

A work machine 10, such as, a telescopic material handler, is partially shown in Figs. 1-4 and incorporates the features of the present stabilizer apparatus 20 thereon. The telescopic material handler 10 is meant only to represent a wide variety of different machines that may incorporate the stabilizer apparatus, including, but not limited to, backhoe loaders, excavators and the like.

The work machine 10 includes a chassis or main frame 30 having a front end portion 40 and a rear end portion (not shown). The work machine 10 is equipped with large front and rear wheels, one of the front wheels being shown at 50, which are rotatably supported on a respective front axle 60 and a respective rear axle (not shown). The front axle 60 and the rear axle (not shown) are shiftably connected to the main frame 30 in a well-known manner near the respective front end 40 and rear end (not shown).

Referring more specifically to Figs. 1-3, the work machine 10 also includes means for leveling the main frame 30. While various means for leveling can be used, in the illustrated arrangement, the means for leveling includes a double-acting, hydraulic leveling cylinder assembly 70 which is pivotally interconnected between the main frame 30 and the front axle 60. The leveling cylinder assembly 70 includes a leveling cylinder 80 and a reciprocating rod 90 at least partially disposed within the leveling cylinder 80. The leveling cylinder assembly 70 is supplied with hydraulic fluid from a fluid source (not shown). Fluid flow to and from the leveling cylinder assembly 70 is preferably manually controllable by an operator (not shown), such as by a convention joystick controller (not shown). Thus, the operator (not shown) can selectively extend or retract the rod 90 to level the main frame 30 to compensate for uneven terrain. It should be understood that although in the illustrated arrangement the leveling cylinder assembly 70 is connected between the main frame 30 and the front axle 60, in other arrangements, the leveling cylinder assembly 70 could be positioned in the rear of the work machine between the main frame 30 and the rear axle (not shown).

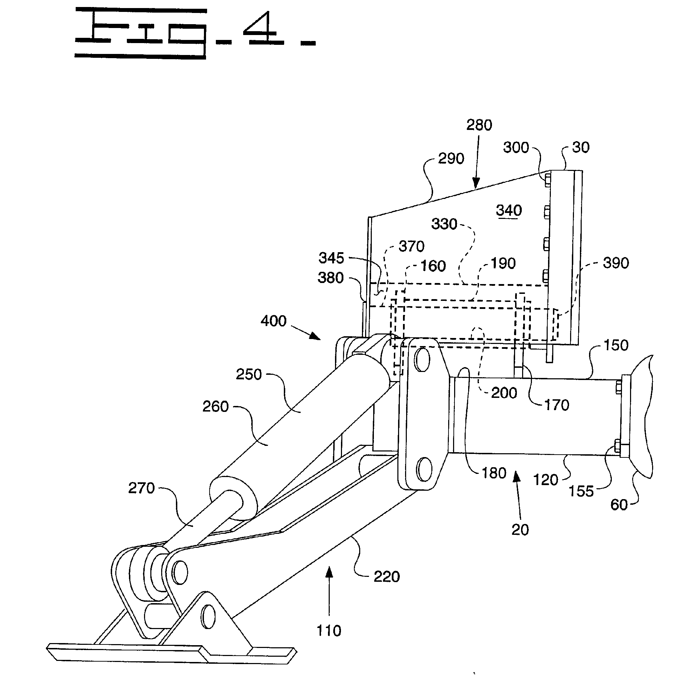

Referring again to Figs. 1-4, the stabilizer apparatus 20 includes a stabilizer assembly 110 with a substantially enclosed lower box assembly 120 operatively associated with the front axle 60. The lower box assembly 120 includes a body portion 130 and a pair of spaced leg portions 140,150 extending from the body portion 130 a predetermined distance. The leg portions 140,150 are each removably connected, such as through a plurality of bolts 155, to the front axle 60. A pair of connector brackets 160,170, seen best in Fig. 4, are connected in any suitable manner to an upper surface 180 of the body portion 130. Each of the connector brackets 160,170 extend a predetermined distance from the upper surface 180 and include an opening therethrough. The connector brackets 160,170 are interconnected via a pin tube 190 extending through each of the openings to define a pin bore 200.

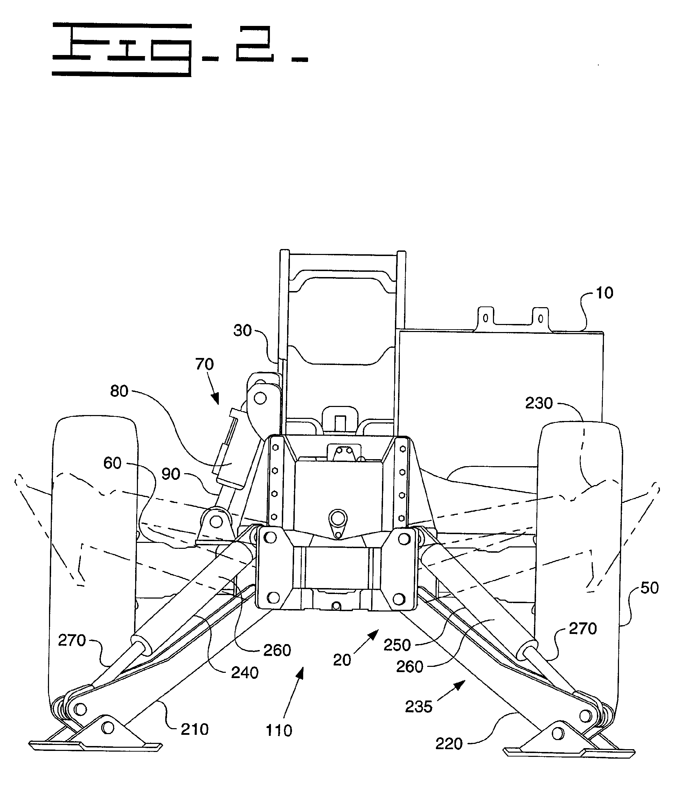

A pair of stabilizer legs 210,220 are pivotally connected on opposite sides, respectively, of the lower box assembly 120 for movement between an upper transport position 230 and a lower ground engaging position 235, as seen in Fig. 2. The stabilizer legs 210,220 are movable through the actuation of a respective stabilizer cylinder assembly 240,250. The stabilizer cylinder assemblies 240,250 each include a stabilizer cylinder 260 and a reciprocating rod 270 at least partially disposed within the stabilizer cylinder 260. The stabilizer cylinder assemblies 240,250 are supplied with hydraulic fluid from the fluid source (not shown). Fluid flow to and from the stabilizer cylinder assemblies 240,250 is preferably manually controllable by an operator (not shown), such as by a convention joystick controller (not shown) via a control device 275, seen in Fig. 1. It should be understood that the control device 275 is shown disconnected from the stabilizer cylinder assemblies 240,250 in Fig. 1 to provide visual clarity of the surrounding components. However, it should be understood that the control device 275 may be a control valve assembly or any other suitable means to provide independent control of fluid flow to the stabilizer cylinder assemblies 240,250.

A connection device 280 is operable between the stabilizer assembly 110 and the main frame 30 to allow pivotal movement of the stabilizer assembly 110 in response to shifting movement of the front axle 60. The connection device 280 includes a partially open upper box assembly 290 removably connected, such as through a plurality of bolts 300, with the main frame 30. The upper box assembly 290 includes two pair of spaced and opposed side walls 310,320, seen best in Fig. 1, and an upper cover (not shown) and an intermediate partition 330 that partially enclose the upper box assembly 290 and define an interior space 340 therein. A portion of the two pair of side walls 310,320 and the intermediate partition 330 define an exterior space 345, seen in Fig. 4. An opening 350 is defined through one of the pair of side walls 310 to establish a clearance space for hoses (not shown) and the like for connection with the control device 275.

The connection device 280 further includes a pin 370 with first and second end portions 380,390 connected to the upper box assembly 290 at a respective side wall 310, seen best in Fig. 4. The connector brackets 160,170 extend upwardly into the exterior space 350 so that the pin 370 extends through the pin bore 200 to pivotally mount the stabilizer assembly 110 with the upper box assembly 290.

A method 400 of automatically moving the stabilizer assembly 110 in conjunction with the shifting movement of the front axle 60 is disclosed and described in more detail below.

### Industrial Applicability

When operating on uneven terrain, the operator (not shown) will independently move the stabilizer legs 210,220 via the stabilizer cylinders 240,250 to the ground engaging position 235 from the transport position 230 to stabilize the work machine 10. The operator (not shown) will then selectively shift the front axle 60 relative to the main frame 30 via the leveling cylinder 70 to level the main frame 30 with the ground.

Due to bolting the stabilizer assembly 110 to the front axle 60 and pivotally connecting the stabilizer assembly 110 with the main frame 30 through the upper box assembly 290 and pin 370, the method 400 of automatically moving the stabilizer assembly 110 in conjunction with the shifting movement of the front axle 60 is accomplished. It should be understood that movement of the lower box assembly 120 and the stabilizer legs 210,220 are coincident in that the movement is simultaneous and dependent on the shifting movement of the front axle 60 to establish a substantially common angular relationship between the front axle 60 and the ground and the stabilizer assembly 110 and the ground. Therefore, independent movement of the stabilizer legs 210,220 to stabilize the work machine 10 after the ground engaging position is set is not needed.

It should be understood that the leveling of the main frame 30 with the ground may be performed prior to moving the stabilizer legs 210,220 to the ground engaging position. When this occurs, the stabilizer assembly 110 moves coincident with the shifting movement of the front axle 60 so that the substantially common angular relationship is set prior to moving the stabilizer legs 210,220. However, in this arrangement, the ability to independently move the stabilizer legs 210,220 should be prevented once the leveling of the main frame 30 occurs so that the stabilizer legs 210,220 move dependently to maintain the substantially common angular relationship with the ground as the front axle 60 through movement to the ground engaging position.

The ability to dependently move the stabilizer legs 210,220 with the front axle 60 virtually eliminates the need to independently move the stabilizer legs 210,220 to different ground engaging positions that correspond with the respective movement of the front axle 60 to level the main frame 30. Further, the stabilizer apparatus 20 is removable from the work machine 10 by simply removing the bolts 155 connecting the lower box assembly 120 with the front axle 60 and the bolts 300 connecting the upper box assembly 290 with the main frame 30. This removability of the stabilizer apparatus 20 allows for its use as an optional feature before or after the sale of the work machine 10. Further, the ability to remove the stabilizer apparatus 20 from the work machine 10 eases any necessary maintenance and repair of the stabilizer apparatus 20 without totally limiting the ability to operate the work machine 10.

Other aspects, objects and advantages of this invention can be obtained from a study of the drawings, disclosure and the appended claims.

## Claims

1. A stabilizer apparatus for a work machine having a frame, an axle for supporting the frame and a hydraulic cylinder connected between the frame and the axle for shifting the axle relative to the frame to level the work machine, the stabilizer apparatus comprising:
a stabilizer assembly removably connectable to the axle of the work machine; and
a connection device operable between the stabilizer assembly and the frame of the work machine to allow pivotal movement of the stabilizer assembly in response to the shifting movement of the axle.

2. The stabilizer apparatus of claim 1, wherein the shifting movement of the axle and the pivotal movement of the stabilizer assembly are coincident and each of the axle and the stabilizer assembly maintain a substantially common angular relationship relative to the ground.

3. The stabilizer apparatus of claim 1, wherein the connection device includes an upper box assembly removably connectable with the frame of the work machine and a pin connected with the upper box assembly for extension through a portion of the stabilizer assembly.

4. The stabilizer apparatus of claim 3, wherein the pin is spaced a predetermined distance from the axle.

5. The stabilizer apparatus of claim 3, wherein the upper box assembly has an interior space defined therein and the stabilizer assembly includes a lower box assembly and a pair of stabilizer legs connected on opposite sides of the lower box assembly, the lower box assembly having a connector bracket extending into the interior space of the upper box assembly to define a pin bore through which the pin extends so that the stabilizer assembly is pivotally mounted with the upper box assembly.

6. A method of automatically moving a stabilizer assembly on a work machine in conjunction with selectable shifting movement of an axle relative to a frame of the work machine, the method comprising the steps of:
removably connecting the stabilizer assembly with the axle;
pivotally connecting the stabilizer assembly with the frame at a predetermined distance from the axle;
connecting a hydraulic cylinder between the frame and the axle;
moving the stabilizer assembly to a ground engaging position from a transport position;
selectively shifting the axle relative to the frame via the hydraulic cylinder to level the frame of the work machine; and
automatically adjusting the position of the stabilizer assembly in response to the shifting of the axle.

7. The method of automatically moving a stabilizer assembly of claim 6, wherein the step of automatically adjusting the position of the stabilizer assembly includes the steps of:
maintaining the stabilizer assembly at a substantially common angular relationship relative to the ground as the axle.

8. The method of automatically moving a stabilizer assembly of claim 6, wherein the pivotal connection between the stabilizer assembly and the frame includes the steps of:
removably connecting a box assembly to the frame; and
connecting a pin to the box assembly for extension through a portion of the stabilizer assembly to achieve the pivotal connection between the stabilizer assembly and the frame.

9. A method of automatically moving a stabilizer assembly on a work machine in conjunction with selectable shifting movement of an axle relative to a frame of the work machine, the method comprising the steps of:
removably connecting the stabilizer assembly with the axle;
pivotally connecting the stabilizer assembly with the frame at a predetermined distance from the axle;
connecting a hydraulic cylinder between the frame and the axle;
selectively shifting the axle relative to the frame via the hydraulic cylinder to level the frame of the work machine;
automatically adjusting the position of the stabilizer assembly in response to the shifting of the axle; and
moving the stabilizer assembly to a ground engaging position from a transport position.

10. The method of automatically moving a stabilizer assembly of claim 9, wherein the step of automatically adjusting the position of the stabilizer assembly includes the step of:
maintaining the stabilizer assembly in a substantially common angular relationship relative to the ground as the axle.

11. The method of automatically moving a stabilizer assembly of claim 9, wherein the step of moving the stabilizer assembly to a ground engaging position includes the step of:
dependently moving a pair of stabilizer legs.

12. The method of automatically moving a stabilizer assembly of claim 9, wherein the pivotal connection between the stabilizer assembly and the frame includes the steps of:
removably connecting a box assembly to the frame; and
connecting a pin to the box assembly for extension through a portion of the stabilizer assembly to achieve the pivotal connection between the stabilizer assembly and the frame.
